# EUROPEAN PATENT APPLICATION

(11) **EP 2 623 803 A1**
(43) Date of publication of application: **07.08.2013**
(21) Application number: 13153591.6
(22) Date of filing: 01.02.2013
(51) Int. Cl.: F16C 33/54

(54) **Roller bearing cage and manufacturing method therefor**

(30) Priority: 03.02.2012 JP 2012022228
(71) Applicant: JTEKT CORPORATION, Osaka-shi Osaka 542-8502 (JP); Utsunomiya Kiki Co., Ltd., Utsunomiya-city, Tochigi 321-0121 (JP)
(72) Inventor: Nakashima, Yoshihito, Osaka-shi,, Osaka 542-8502 (JP); Kuriki, Hajime, Utsunomiya-city, Tochigi 321-0121 (JP)
(74) Representative: Winter, Brandl, Fürniss, Hübner, Röss, Kaiser, Polte - Partnerschaft

(57) **Abstract**

A roller bearing cage 10 includes ring portions 11 and pillar portions 12 extend in an axial direction to connect the ring portions 11 and disposed along a circumferential direction to define pocket portions 13. The pillar portion 12 includes a bent portion 12A formed in the vicinity of an axial center of the pillar portion 12 so as to protrude radially inwards of the ring portions 11. A ring portion thickness H1 is larger than a bent portion thickness H2; a pillar end portion thickness H4 is larger than the bent portion thickness H2; and the pillar end portion thickness H4 is equal to the ring portion thickness H1 or more, where the ring portion thickness H1 is a radial thickness of the ring portion 11; the bent portion thickness H2 is a radial thickness of the bent portion 12A; and the pillar end portion thickness H4 is a thickness of a portion of the pillar portion 12 connected to the ring portion 11 and in the vicinity thereof.

## Description

### BACKGROUND

1. Technical Field

The present invention relates to a roller bearing cage and a manufacturing method therefor.

2. Description of Related Art

A roller bearing device is used in various mechanisms such as an automotive transmission, a mechanical system, etc. In the roller bearing device, a roller bearing cages is used, and various roller baring cages and manufacturing methods therefor have been proposed.

For example, JP-A-2006-7246 describes a method for manufacturing a radial needle bearing cage as an example of a roller bearing cage. In the method, a mold having a cylindrical space portion is used. A hollow cylindrical material is disposed in the space portion, and a cylindrical elastic member is disposed on an inner circumferential side of the material in the space portion. The elastic member is longer than that of the material in an axial direction. Then, the elastic member is compressed in the axial direction, thereby being deformed radially outwards so as to expand the diameter of the material, and the elastic member continues to be deformed plastically until the material comes to match an inner shape of the mold disposed on an outer circumferential side of the material.

### SUMMARY

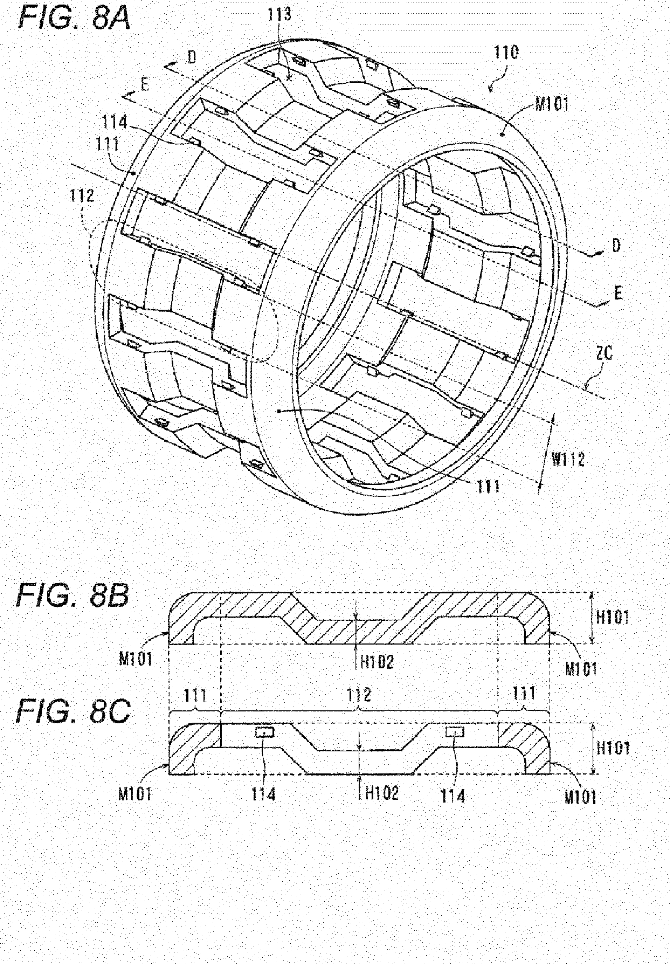

Figs. 8A to 8C shows a roller bearing cage 110 which is illustrated based on JP-A-2006-7246. Fig. 8A is a perspective view of the roller bearing case 110, Fig. 8B is a sectional view taken along the line D-D in Fig. 8A, and Fig. 8C is a sectional view taken along the line E-E in Fig. 8A.

The roller bearing cage 110 includes: a pair of ring portions 111 which are disposed coaxially; and a plurality of pillar portions 112 that extend in an axial direction to connect one ring portion 111 to the other ring portion 111 and which are disposed at equal intervals along a circumferential direction of the ring portions 111, thereby defining a plurality of pocket portions 113 in which rollers are accommodated. Additionally, in the roller bearing case 110, stress is likely to invariably concentrate on connecting portions between the pillar portions 112 and the ring portions 111 by the movement of the rollers accommodated in the pocket portions 113.

The roller bearing cage 110 is formed of a hollow cylindrical material having a constant thickness. Consequently, in order to further increase the rigidity of the connecting portions between the pillar portions 112 and the ring portions 111, a circumferential width of the pillar portions 112 needs to be increased. However, when the circumferential width of the pillar portions 112 is increased, the number of pocket portions 113 is decreased, which decreases the number of rollers that can be accommodated in the cage. As a result, the bearing capacity of the roller bearing device is decreased (in the event that the diameter of the roller bearing cage 110 and the size of the rollers remain the same).

In addition, in the roller bearing cage 110, axial end faces M101 are bent radially inwards (refer to Figs. 8B and 8C) so as to further increase a contact area (the area of the end face M101) with another member which contacts the end faces M101, whereby the wear of another member and the end faces M101 is reduced. Consequently, the bending work to bend the axial end faces M101 is needed.

The invention has been made in view of the above-described circumstances, and an object thereof is to provide a roller bearing cage which can increase the rigidity of connecting portions between pillar portions and ring portions and also increase the number of pocket portions to increase the bearing capacity and which can be produced efficiently, and a method for manufacturing the roller bearing cage.

In a first aspect of the invention, a roller bearing cage includes: a pair of ring portions which are disposed coaxially with a given space defined therebetween; and a plurality of pillar portions which extend in an axial direction to connect one of the ring portions to the other of the ring portions and which are disposed at substantially equal intervals along a circumferential direction of the ring portions so as to define a plurality of pocket portions capable of accommodating rollers.

The pillar portion includes a bent portion formed in the vicinity of an axial center of the pillar portion so as to protrude radially inwards of the ring portions.

A ring portion thickness is larger than a bent portion thickness, a pillar end portion thickness is larger than the bent portion thickness, and the pillar end portion thickness is equal to the ring portion thickness or more, where the ring portion thickness is a radial thickness of the ring portion, the bent portion thickness is a radial thickness of the bent portion, and the pillar end portion thickness is a thickness of a portion of the pillar portion connected to the ring portion and in the vicinity thereof.

According to the first aspect of the invention, by further increasing the radial thickness of the ring portions (the ring portion thickness), it is possible to ensure the contact area with another member which contacts the axial end faces of the roller bearing cage without bending the end faces.

Consequently, the bending work of the end faces of the roller bearing cage becomes unnecessary, whereby the roller bearing cage can be produced with better efficiency.

Further, the radial thickness of the pillar portion (the pillar end portion thickness) is further increased at the connecting portion between the pillar portion and the ring portions, whereby the rigidity of the connecting portion between the pillar portion and the ring portions can be increased without increasing the circumferential width of the pillar portion.

Consequently, the circumferential width of the pillar portion can be further decreased as compared with the roller bearing cage in the related art, and the number of pocket portion can also be increased as compared with the related art roller bearing cage. Therefore, it becomes possible to accommodate a larger number of rollers as compared with the related art roller bearing cage, whereby the bearing capacity can be increased.

In a second aspect of the invention, a method for manufacturing the roller bearing cage of the first aspect of the invention, includes: pressing a plate-shaped material which has a thickness corresponding to the ring portion thickness and a width corresponding to an axial length of the roller bearing cage and of which a longitudinal direction is perpendicular to a width direction and a thickness direction, such that a thickness in the vicinity of a width center is smaller than both width end portions and such that the bent portion is formed in the vicinity of the width center; punching the pressed material to form pocket portions each of which extends between portions in the vicinity of the both width end portions and having a thickness larger than the thickness in the vicinity of the center such that the pocket portions are arranged at substantially equal intervals along the longitudinal direction; forming claw portions for holding rollers accommodated in the pocket portions on the pillar portions each of which is formed between the adjacent pocket portions; and curving the pressed, punched and claw formed material along the longitudinal direction so as to form a cylindrical shape, and connecting one end portion and the other end portion in the longitudinal direction together.

According to the second aspect of the invention, it is possible to produce the roller bearing cage according to the first aspect of the invention through the appropriate steps with better efficiency.

### BRIEF DESCRIPTION OF THE DRAWINGS

Fig. 1A shows a perspective view illustrating a roller bearing cage 10 according to one embodiment of the invention, Fig. 1B shows a sectional view which is taken along the line B-B shown at Fig. 1A, and Fig. 1C shows a section view which is taken along the line C-C shown at Fig. 1A;

Fig. 2 is a sectional view taken along the line A-A shown in Fig. 1A, which shows a state in which rollers 20 are accommodated in pocket portions 13;

Fig. 3A shows a perspective view of a pressed material 21 which results from pressing a plate-shaped material, and Fig. 3B shows a sectional view which is taken along the line F-F shown at Fig. 3A;

Fig. 4A shows a perspective view of a punched material 22 which results from punching (temporary) pocket portions 22A in the pressed material 21, and Fig. 4B shows a plan view of the punched material 22;

Fig. 5A shows a perspective view of a finished material 23 which results from finishing the punched material 22 with pocket portions 13, and Fig. 5B shows a plan view of the finished material 23;

Fig. 6A shows a perspective view of a claw portion formed material 24 which results from forming claw portions 14 on the finished material 23, Fig. 6B shows a sectional view which is taken along the line G-G shown at Fig. 6A, and Fig. 6C shows a plan view of the claw portion formed material 24;

Fig. 7A shows a perspective view of a cut material 25 which results from cutting the claw portion formed material 24 into an appropriate length, Fig. 7B shows an explanatory diagram which illustrates how to form a roller bearing case 10 by curving the cut material 25 shown at Fig. 7A into a ring shape and connecting end faces of the cut material 25 so curved together, and Fig. 7C shows an explanatory diagram at (C) which illustrates an example of weld beads 11X, 11Y which are formed when a ring portion 11 is formed by connecting the end faces together; and

Fig. 8A shows a perspective view of a roller bearing cage 110, Fig. 8B shows a sectional view which is taken along the line D-D shown at Fig. 8A, and Fig. 8C is a sectional view which is taken along the line E-E shown at Fig. 8A.

### DETAILED DESCRIPTION

Hereinafter, an embodiment of the invention will be described using the drawings.

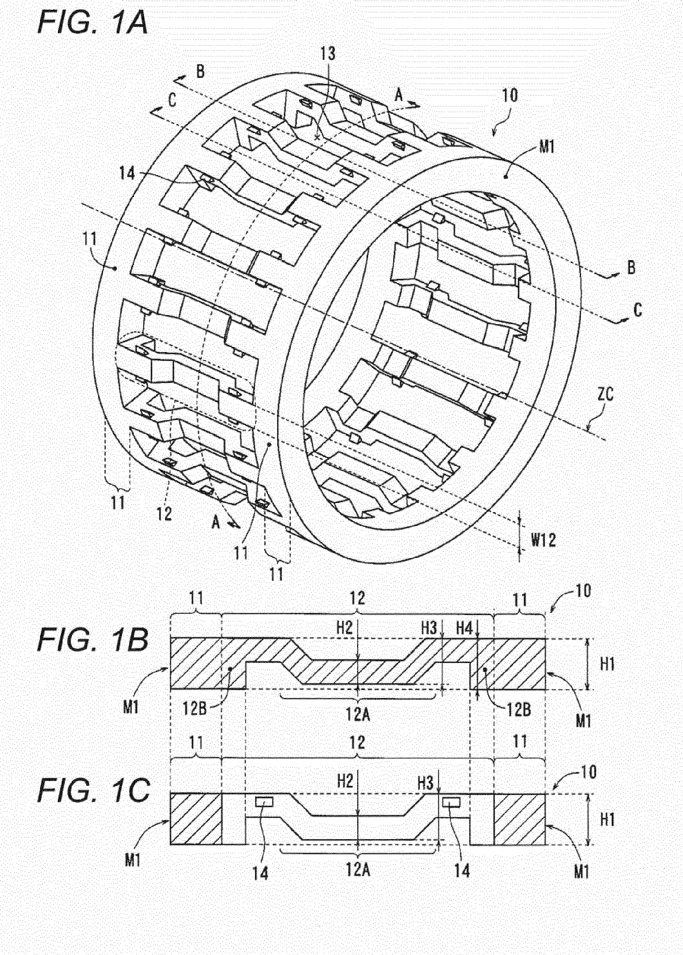

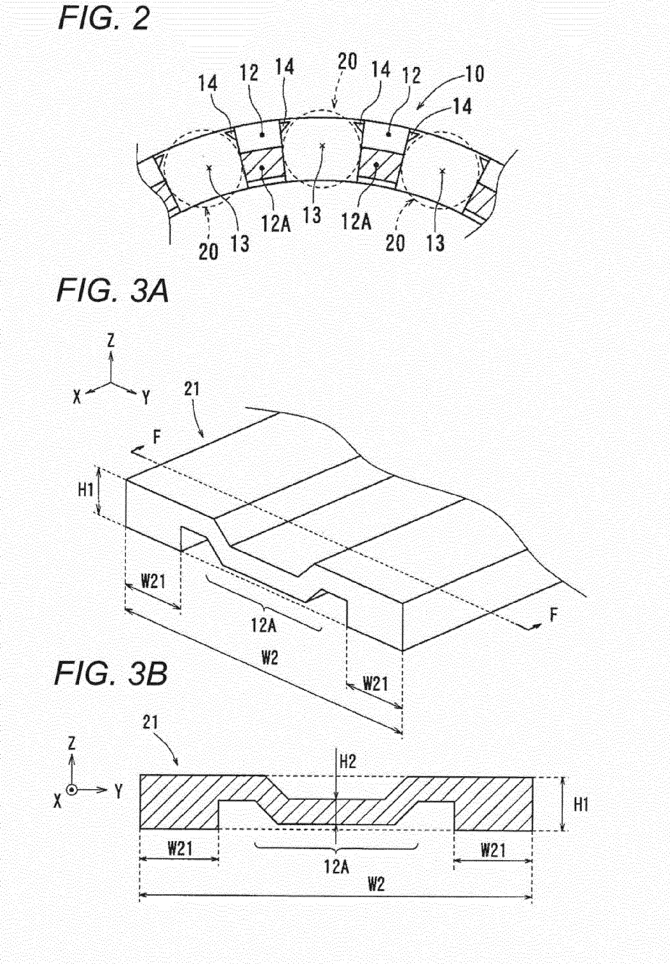

1. Overall configuration of the roller bearing cage 10 (Figs. 1A to 1C) and a state in which rollers 20 are accommodated in pocket portions 13 (Fig. 2)

Fig. 1A shows a perspective view of an embodiment of a roller bearing cage 10, Fig. 1B shows a sectional view taken along the line B-B in Fig. 1A, and Fig. 1C shows a sectional view taken along the line C-C in Fig. 1A.

As shown in Figs. 1A to 1C, the roller bearing cage 10 includes a pair of ring portions 11 and a plurality of pillar portions 12, and a plurality of pocket portions 13 are formed in the roller bearing cage 10 for accommodating rollers therein.

The ring portions 11 are disposed coaxially with a predetermined space (a space corresponding to a length of the pillar portion 12 in a center axis ZC direction) defined therebetween in the center axis ZC direction and each have a substantially rectangular section when they are cut along a plane including the center axis ZC.

The pillar portions 12 extend along the center axis ZC direction to connect one ring portion 11 with the other ring portion 11 and are aligned at equal intervals along a circumferential direction of the ring portions 11 so as to define the plurality of pocket portions 13 which accommodate therein the rollers. Namely, as shown in Figs. 1A to 1C, the pillar portion 12 is defined to extend from one end to the other end of the pocket portion 13 in the center axis ZC direction.

Additionally, a bent portion 12A is formed on the pillar portion 12 near a center thereof in the center axis ZC direction, and the bent portion 12A is bent so as to project radially inwards of the ring portions 11 (refer to Figs. 1A and 1B).

A ring portion thickness H1 which is a radial thickness of the ring portion 11 is larger than a bent portion thickness H2 which is a radial thickness of the bent portion 12A (the ring portion thickness H1 > the bent portion thickness H2).

Additionally, the ring portion thickness H1 is equal to or more a radial distance H3 which extends from a position on the bent portion 12A which is closest to the center axis ZC of the ring portion 11 to a position on the bent portion 12A which is farthest from the center axis ZC of the ring portion 11 (the ring portion thickness H1 ≥ the distance H3).

Further, at a pillar end portion 12B at a connecting portion of the pillar portion 12 with the ring portion 11 and a portion in the vicinity of the connecting portion, a pillar end portion thickness H4 which is a radial thickness of the pillar end portion 12B is larger than the bent portion thickness H2 (the pillar end portion thickness H4 > the bent portion thickness H2).

In addition, in this embodiment, the pillar end portion thickness H4 is made equal to the ring portion thickness H1 (the pillar end portion thickness H4 = the ring portion thickness H1). Although weld beads (filling portions resulting as weld marks) may be generated when welding is used in a connecting step) as will be described later, when referred to herein, the ring portion thickness H1 does not include the generated weld beads.

Thus, in the roller bearing cage 10 according to the embodiment, at the connecting portions between the pillar portions 12 and the ring portions 11, the radial thickness of the pillar portion 12 (the pillar end portion thickness H4) is larger than that of the roller bearing cage 110 shown in Figs. 8A to 8C. Consequently, the rigidity of the connecting portions between the pillar portions 12 and the ring portions 11 is further increased without increasing a circumferential width W12 of the pillar portions 12.

Consequently, when the same rigidity as that of the roller bearing cage 110 shown in Figs. 8A to 8C is ensured in the roller bearing cage 10 of this embodiment, the width W12 of the pillar portion 12 of the roller bearing cage 10 of this embodiment can be smaller than a width W112 of the pillar portion 112 of the roller bearing cage 110. This enables the roller bearing cage 10 of this embodiment to have a larger number of pocket portions 13 than the roller bearing cage 110.

Consequently, the roller bearing cage 10 of this embodiment is allowed to accommodate a larger number of rollers than the roller bearing cage 110, which increases the bearing capacity of the roller bearing cage 10.

In addition, in the roller bearing cage 10 of this embodiment, the radial thickness of the ring portion 11 is larger than that of the roller bearing cage 110, and therefore, end faces M1 of the roller bearing cage 10 in the center axis direction do not have to be bent. Even in this case, a contact area of the end face M1 with another which contacts the end face M1 (the area of the end face M1) is ensured.

Consequently, the bending work of the end faces M1 of the roller bearing cage 10 becomes unnecessary, whereby the roller bearing cage 10 can be produced with better efficiency.

Fig. 2 is a sectional view taken along the line A-A in Fig. 1A and shows a state in which the rollers are accommodated in the pocket portions 13.

The rollers 20 are accommodated individually in the pocket portions 13 formed in the roller bearing cage 10. Each roller is supported by the bent portions 12A on a radially inward side and by claw portions 14 (claw portions 14 formed on circumferential surfaces of the pillar portions 12) on a radially outward side thereof.

2. Method for manufacturing the roller bearing cage 10 (Figs. 3A to 7C)]

Next, a method for manufacturing the roller bearing cage 10 will be described by using Figs. 3A to 7C.

As will be described below, the roller bearing cage 10 is produced through a pressing step, a pocket portion punching step, a pocket portion finishing step, a claw portion forming step and a connecting step.

Hereinafter, those steps will be described sequentially one by one.

2.1 Pressing step and pressed material 21 (Figs. 3A and 3B)

A pressing step is a step of pressing a plate-shaped material (a belt-shaped material) to obtain a pressed material 21 having a desired sectional shape (a sectional shape which intersects the longitudinal direction at right angles).

Fig. 3A shows a perspective view of the pressed material 21, Fig. 3B is a sectional view taken along the line F-F in Fig. 3A which shows a sectional view of the pressed material 21 in a direction which intersects a longitudinal direction thereof at right angles.

The plate-shaped material before a pressing step is a plate-shaped material that has a thickness corresponding to the ring portion thickness H1 and a width W2 corresponding to a length of the roller bearing cage 10 in the center axis direction and in which a longitudinal direction intersects a width direction and a thickness direction.

The plate-shaped material is pressed into a pressed material 21 in which portions extending over a width W21 from both end portions of the plate-shaped material in the width direction are left as large as the ring portion thickness H1, a central portion in the width direction is pressed to as large as the bent portion thickness H2 and a bent portion 12A is formed at the central portion in the width direction.

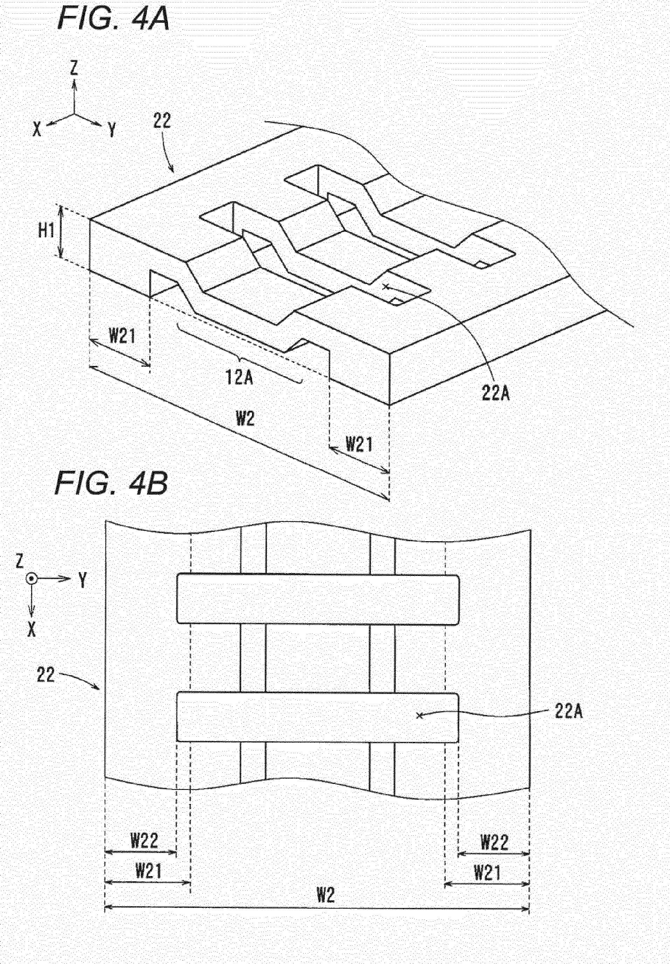

2.2 Pocket portion punching step and punched material 22 (Figs. 4A and 4B)

The pocket portion punching step is a step of punching (temporary) pocket portions 22A in the pressed material 21 to obtain a punched material 22 having the (temporary) pocket portions 22A.

Fig. 4A shows a perspective view of the punched material 22 and Fig. 4B shows a plan view of the punched material 22.

The (temporary) pocket portions 22A are punched in the pressed material 21 by a punch shaped into the shape of the (temporary) pocket portion 22A along the longitudinal direction of the pressed material 21, whereby the pressed material 21 is formed into the punched material 22.

Figs. 4A and 4B illustrate an example in which the (temporary) pocket portions 22A are punched so that a width W22 defined from an end portion of the (temporary) pocket portion 22A in the width direction to an end portion of the punched material 22 in the width direction becomes smaller than the width W21. Namely, the (temporary) pocket portion 22A has such a size that extends in the width direction between portions of the punched material 22 which are larger than the bent portion thickness H2 near the center (portions having a thickness corresponding to the ring portion thickness H1).

In addition, in the example shown in Figs. 4A and 4B, the (temporary) pocket portions 22A each have a rectangular shape, but the invention is not limited to the rectangular shape.

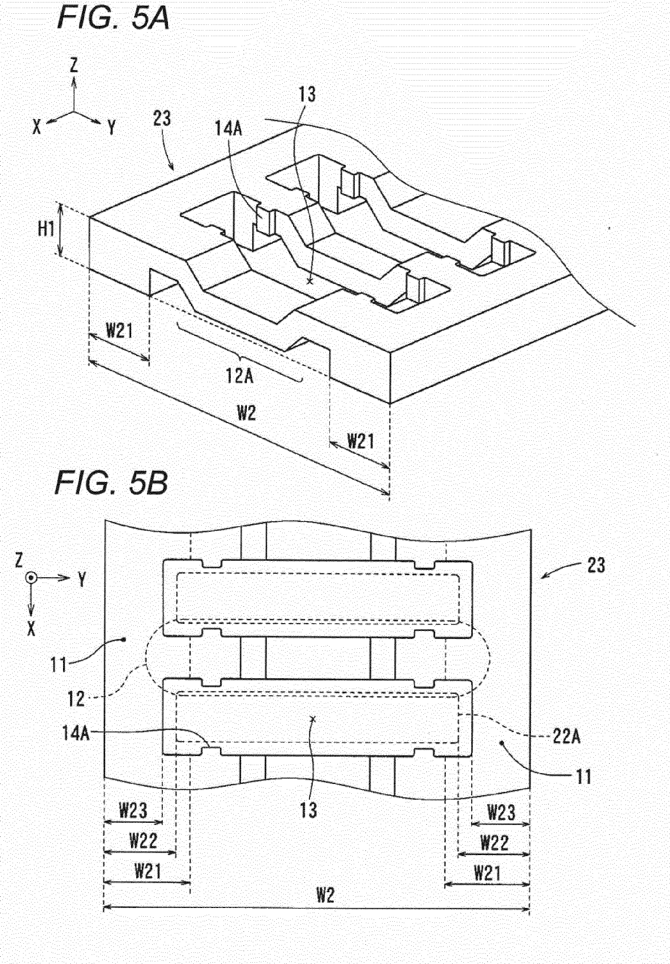

2.3 Pocket portion finishing step and finished material 23 (Figs. 5A and 5B)

The pocket portion finishing step is a step of finishing the (temporary) pocket portions 22A in the punched material 22 into the pocket portions 13 to obtain a finished material 23.

Fig. 5A shows a perspective view of the finished material 23, and Fig. 5B shows a plan view of the finished material 23.

The (temporary) pocket portions 22A in the punched material 22 are punched by a punch having the shape of the pocket portion 13, whereby the punched material 22 is formed into the finished material 23.

Additionally, claw forming projecting portions 14A are formed on the pillar portions 12 shown in Fig. 5B so that claw portions 14 are formed in the following step.

Figs. 5A and 5B show an example in which the pocket portions 13 are finished so that a width W23 which is defined from an end portion of the pocket portion 13 in the width direction to an end portion of the finished material 23 in the width direction becomes smaller than the width W21 of the punched material 22. Additionally, the shape of the pocket portions 13 is not limited to the shape illustrated in the example shown in Figs. 5A and 5B.

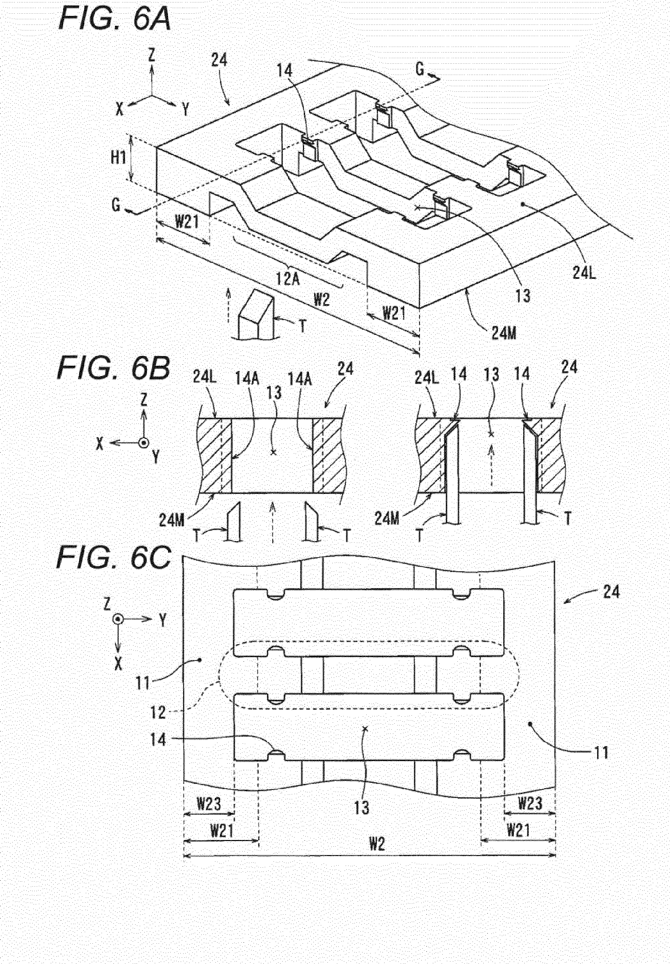

2.4 Claw portion forming step and claw portion formed material 24 (Figs. 6A to 6C)

The claw forming step is a step of forming the claw portions 14 at the claw forming projecting portions 14A of the finished material 23 to obtain a claw portion formed material 24.

Fig. 6A shows a perspective view of a claw portion formed material 24, Fig. 6B is a sectional view taken along the line G-G in Fig. 6A which shows an example in which claw portions 14 are formed by using claw portion forming jigs T, and Fig. 6C shows a plan view of the claw portion formed material 24.

As shown in Figs. 6A to 6C, in the finished material 23, the claw portion forming jigs T are used from a surface 24M (a lower surface in the example shown in Fig. 6A) on a side where the bent portion 12A becomes protuberant towards a surface 24L on a side where the bent portion 12A becomes depressed to form claw portions 14 near the surface 24L, whereby the finished material 23 is formed into the claw portion formed material 24.

For example, as shown in Figs. 6A and 6B, the claw portion forming jig T is a jig having an inclined surface at a distal end thereof and moves a surface portion of the claw forming projecting portion 14A from the surface 24M side towards the surface 24L side to thereby form a claw portion 14 so as to project inwards of the pocket portion 13.

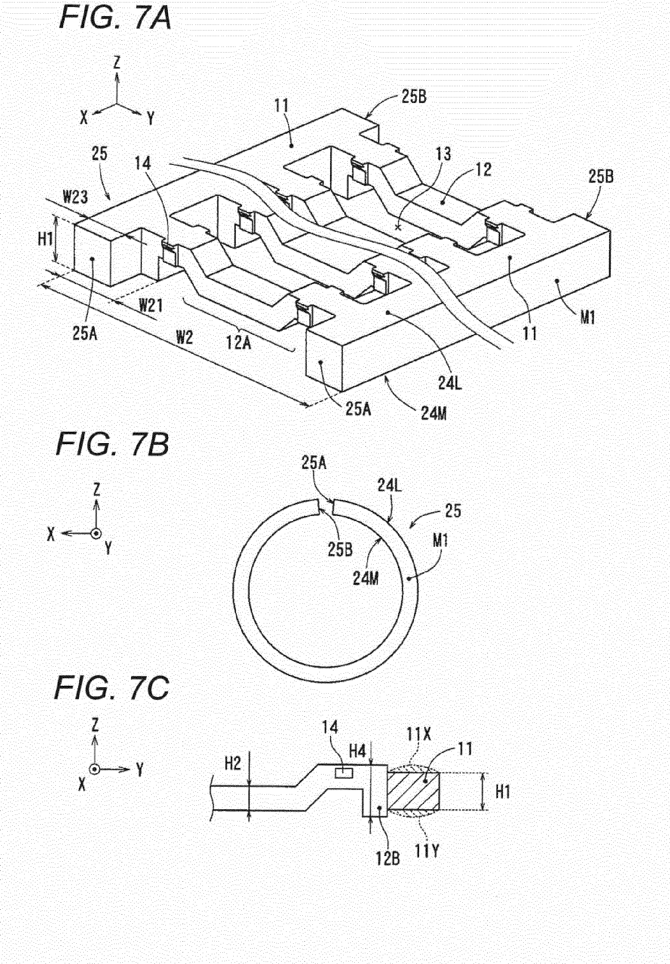

2.5 Connecting step and cut material 25 (Figs. 7A to 7C)

The connecting step is a step of cutting the claw portion formed material 24 to an appropriate length, curving a resulting cut material 25 into a ring shape (a cylindrical shape) and connecting together end faces of the curved cut material 25 to obtain a roller bearing cage 10.

Fig. 7A shows a perspective view of the cut material 25, Fig. 7B shows how to form the cut material 25 into the ring shape (the hollow cylindrical shape) of the roller bearing cage 10 by connecting both the end faces of the cut material 25 together. Additionally, Fig. 7C shows an example of a state in which weld beads 11X, 11Y are filled when the end faces of the ring portion 11 are connected together by means of welding.

The claw portion formed material 24 is cut to the appropriate length to obtain the cut material 25 in such a way that the pocket portion 13 is formed halfway individually at one end face 25A and the other end face 25B in a longitudinal direction of the resulting cut material 25. Namely, the shape which results from cutting the roller bearing cage 10 shown in Fig. 1A along the C-C plane and deploying the cut roller bearing cage 10 into a belt-like shape becomes the same as the shape of the cut material 25 shown in Fig. 7A.

Then, as shown in Fig. 7B, the cut material 25 is curved into the ring shape (the hollow cylindrical shape) so that the surface 24M side where the bent portion 12A becomes protuberant constitutes an inner circumferential side and the surface 24L side where the bent portion 12A becomes depressed constitutes an outer circumferential side, and the end face 25A and the end face 25B are connected together by means of, for example, resistance welding.

When the end faces of the ring portion 11 are connected together by means of welding such as resistance welding, there may be generated weld beads 11X, 11Y (filling portions resulting as weld marks), and therefore, the thickness of the ring portion 11 (the ring portion thickness H1) may be set to a thickness which results as a consequence of taking the protruding amount of the weld beads into consideration.

For example, as shown in Fig. 7C, the pillar end portion thickness H4 is set to a thickness which is equal to the ring portion thickness H1 or more. As this occurs, the outside diameter of the ring portion 11 is set to be slightly smaller than the outside diameter of the pillar end portion 12B, while the bore diameter of the ring portion 11 is set to be slightly larger than the bore diameter of the pillar end portion 12B. Consequently, even when the thickness (the radial thickness) of the ring portion 11 is increased by the weld bead 11X which is filled on a radially outer side and the weld bead 11Y which is filled on a radially inner side of the ring portion 11, the ring portion thickness H1 can be prevented from exceeding the pillar end portion thickness H4, which is more preferable.

Although Fig. 7C shows the example in which the weld bead 11X is generated on the radially outer side of the ring portion 11 and the weld bead 11Y is generated on the radially inner side of the ring portion 11, there may be a case where the weld bead 11X is generated only on the radially outer side of the ring portion 11 or the weld bead 11Y is generated only on the radially inner side of the ring portion 11. When the weld bead 11X is generated only on the radially outer side of the ring portion 11, it is preferable that the outside diameter of the ring portion 11 is set to be slightly smaller than the outside diameter of the pillar end portion 12B and the bore diameter of the ring portion 11 is set to be equal to the bore diameter of the pillar end portion 12B. On the contrary, when the weld bead 11Y is generated only on the radially inner side of the ring portion 11, it is preferable that the bore diameter of the ring portion 11 is set to be slightly larger than the bore diameter of the pillar end portion 12B and the outside diameter of the ring portion 11 is set to be equal to the outside diameter of the pillar end portion 12B.

Additionally, in the description of the embodiment of the invention, as shown in Figs. 1B and 1C, the bore diameter of the pillar end portion 12B and the bore diameter of the ring portion 11 are described as being smaller than the bore diameter of the bent portion 12A. However, in consideration of the protruding amount of the weld beads, the bore diameter of the pillar end portion 12B and the bore diameter of the ring portion 11 (in particular, the bore diameter of the ring portion 11) may be set to be larger than the bore diameter of the bent portion 12A.

Thus, in the roller bearing cage 10 described in the embodiment, the bending work of the end faces M1 of the roller bearing cage 10 becomes unnecessary, and hence, the roller bearing cage 10 of this embodiment can be produced with better efficiency through the pressing step to the connecting step.

The roller bearing cage and the method for manufacturing the roller bearing cage of the invention are not limited to the external appearance, configuration, construction and steps which are described in the embodiment, and hence, various modifications, additions or deletions may be made to the embodiment without departing from the spirit and scope of the invention.

Additionally, in the embodiment, while the roller bearing cage 10 and the method for manufacturing the roller bearing cage have been described in view of the radial roller bearing device, the invention may also be applied to a thrust roller bearing cage and a manufacturing method therefor so as to increase the bearing capacity of a thrust bearing device.

## Claims

1. A roller bearing cage comprising:
a pair of ring portions which are disposed coaxially with a given space defined therebetween; and
a plurality of pillar portions which extend in an axial direction to connect one of the ring portions to the other of the ring portions and which are disposed at substantially equal intervals along a circumferential direction of the ring portions so as to define a plurality of pocket portions capable of accommodating rollers,
wherein the pillar portion comprises a bent portion formed in the vicinity of an axial center of the pillar portion so as to protrude radially inwards of the ring portions,
wherein a ring portion thickness is larger than a bent portion thickness; a pillar end portion thickness is larger than the bent portion thickness; and the pillar end portion thickness is equal to the ring portion thickness or more,
where the ring portion thickness is a radial thickness of the ring portion; the bent portion thickness is a radial thickness of the bent portion; and the pillar end portion thickness is a thickness of a portion of the pillar portion connected to the ring portion and in the vicinity thereof.

2. A method for manufacturing the roller bearing cage according to claim 1, said method comprising:
pressing a plate-shaped material which has a thickness corresponding to the ring portion thickness and a width corresponding to an axial length of the roller bearing cage and of which a longitudinal direction is perpendicular to a width direction and a thickness direction, such that a thickness in the vicinity of a width center is smaller than both width end portions and such that the bent portion is formed in the vicinity of the width center;
punching the pressed material to form pocket portions each of which extends between portions in the vicinity of the both width end portions and having a thickness larger than the thickness in the vicinity of the center, such that the pocket portions are arranged at substantially equal intervals along the longitudinal direction;
forming claw portions for holding rollers accommodated in the pocket portions on the pillar portions each of which is formed between the adjacent pocket portions; and
curving the pressed, punched and claw formed material along the longitudinal direction so as to form a cylindrical shape, and connecting one end portion and the other end portion in the longitudinal direction together.
